# FASCICULE DE BREVET EUROPEEN

(11) **EP 2 829 434 B1**
(45) Date de publication et mention de la délivrance du brevet: **04.05.2016**
(21) Numéro de dépôt: 14177959.5
(22) Date de dépôt: 22.07.2014
(51) Int. Cl.: B60N 2/70, B60N 2/00

(54) **Elément d'assise amélioré pour siège**
Verbessertes Sitzelement für einen Sitz
Improved seating element for a seat

(30) Priorité: 24.07.2013 FR 1301775
(43) Date de publication de la demande: 28.01.2015
(73) Titulaire: Comatel Casuel, 01350 Beon (FR)
(72) Inventeur: Bechet, Michel, 01420 Corbonod (FR); Gagliardi, Christian, 73170 Yenne (FR)
(74) Mandataire: Talbot, Alexandre

(56) Documents cités:
- WO-A1-00/26626
- DE-C1- 4 237 072
- US-A1- 2001 020 395
- US-B1- 6 643 925

## Description

### Domaine technique de l'invention

L'invention concerne un élément d'assise amélioré pour un siège, notamment un siège de véhicule, comportant une nappe de suspension déformable et au moins une piste électrique, de préférence formée par une encre conductrice, et configurée pour présenter une résistance linéique variable en fonction de la déformation de la nappe de suspension. Un tel élément d'assise trouve notamment son application dans l'élaboration d'un dispositif de détection d'occupation de siège ou de classification d'un passager assis sur un siège.

L'invention concerne également un siège comportant un tel élément d'assise.

### État de la technique

Afin d'améliorer la sécurité et le confort des occupants, les sièges, notamment les sièges pour véhicule, comprennent désormais de plus en plus de détecteurs intégrés. Les dispositifs de détection pour siège comportent généralement un capteur de pression flexible qui détecte et, éventuellement, quantifie une pression exercée par un passager sur le siège.

Un détecteur de pression flexible a par exemple été décrit dans le document DE-A-42 37 072. Il s'agit d'un dispositif de détection de pression à intégrer dans un siège comportant deux substrats flexibles isolants disposés l'un au dessus de l'autre à l'aide d'un écarteur. L'un des substrats flexibles est muni de deux structures d'électrodes en matériau conducteur espacées l'une de l'autre, tandis que l'autre substrat flexible est muni d'un revêtement semi-conducteur ou résistif, sensible à la pression. Le matériau semi-conducteur ou résistif présente à sa surface des microsaillies de sorte que la résistance de surface entre le matériau semi-conducteur et un conducteur, tel que les structures d'électrodes, diminue quand ledit matériau est pressé sur le conducteur.

Lorsque le siège n'est pas occupé, c'est-à-dire lorsqu'aucune pression n'agit sur le détecteur, les deux substrats sont écartés l'un de l'autre, le matériau semi-conducteur n'est donc pas en contact avec les deux électrodes et la résistance électrique entre les deux électrodes est élevée. En revanche, lorsque le siège est occupé, les deux substrats sont pressés l'un contre l'autre et le revêtement semi-conducteur sensible à la pression vient en contact avec les deux électrodes. Un court-circuit entre les deux électrodes est ainsi réalisé. Plus la pression sur le détecteur augmente, plus le revêtement semi-conducteur est comprimé, plus il entre en contact intime avec les électrodes et plus la résistance mesurée entre les deux électrodes diminue.

Un tel détecteur présente cependant l'inconvénient d'être relativement épais puisqu'il nécessite l'utilisation de deux substrats distincts espacés l'un de l'autre. De plus, en raison de l'utilisation d'un matériau semi-conducteur possédant à sa surface des microsaillies, un tel détecteur présente une grande raideur à la flexion ou à la torsion.

Recherchant à réduire les problèmes d'épaisseur et de raideur des détecteurs de pression tels que précédemment décrits, il a été proposé dans le document WO-A-00/26626, un détecteur comprenant un support flexible en matière isolante, au moins deux structures d'électrodes disposées sur ledit support isolant à une certaine distance l'une de l'autre et une couche en matière semi-conductrice disposée au dessus desdites structures d'électrodes. Ladite couche en matière semi-conductrice présente une résistance interne variant avec la déformation de la couche et est disposée en contact intime avec les structures d'électrodes. Afin de détecter la présence d'un passager sur le siège, le détecteur est intégré dans le siège automobile, par exemple entre la mousse et la housse du siège. La pression mesurée permet par exemple de conclure sur une occupation éventuelle du siège et/ou sur la stature de la personne assise.

Contrairement aux détecteurs de l'art antérieur, un tel détecteur ne présente donc qu'une seule feuille support sur laquelle sont disposées aussi bien les structures d'électrodes que la couche en matière semi-conductrice. Cependant, un tel dispositif est connu pour présenter des problèmes de fonctionnement.

### Objet de l'invention

L'invention a pour but de proposer un élément d'assise amélioré pour un siège, ledit élément d'assise permettant non seulement le maintien efficace et confortable du passager et présentant également un fonctionnement plus fiable.

Selon l'invention, ce but est atteint par le fait que l'élément d'assise comporte une nappe de suspension déformable et au moins une piste électrique, pouvant être formée par une encre conductrice, et configurée pour présenter une résistance linéique variable en fonction de la déformation de la nappe de suspension, la piste électrique étant formée directement sur la nappe de suspension ou au sein de la nappe de suspension.

Ainsi, une telle piste électrique forme un capteur présentant un alignement parfait par rapport à la nappe de suspension, ce qui assure un fonctionnement fiable du capteur.

### Description sommaire des dessins

D'autres avantages et caractéristiques ressortiront plus clairement de la description qui va suivre des modes particuliers de réalisation de l'invention donnés à titre d'exemples non limitatifs et représentés aux dessins annexés, dans lesquels :
- la figure 1 représente, schématiquement et en perspective, un élément d'assise 1 comportant une nappe de suspension tissée et une piste électrique,
- la figure 2 représente, schématiquement et en perspective, un élément d'assise comportant une nappe de suspension telle qu'une nappe à base de polymère comportant deux pistes électriques.

### Description des modes de réalisation particuliers de l'invention

Selon un mode de réalisation, l'élément d'assise 1 pour un siège comporte une nappe de suspension 3 déformable et au moins une piste électrique 2 formée par une encre conductrice. La piste électrique 2 est configurée pour présenter une résistance linéique variable en fonction de la déformation de la nappe de suspension 3.

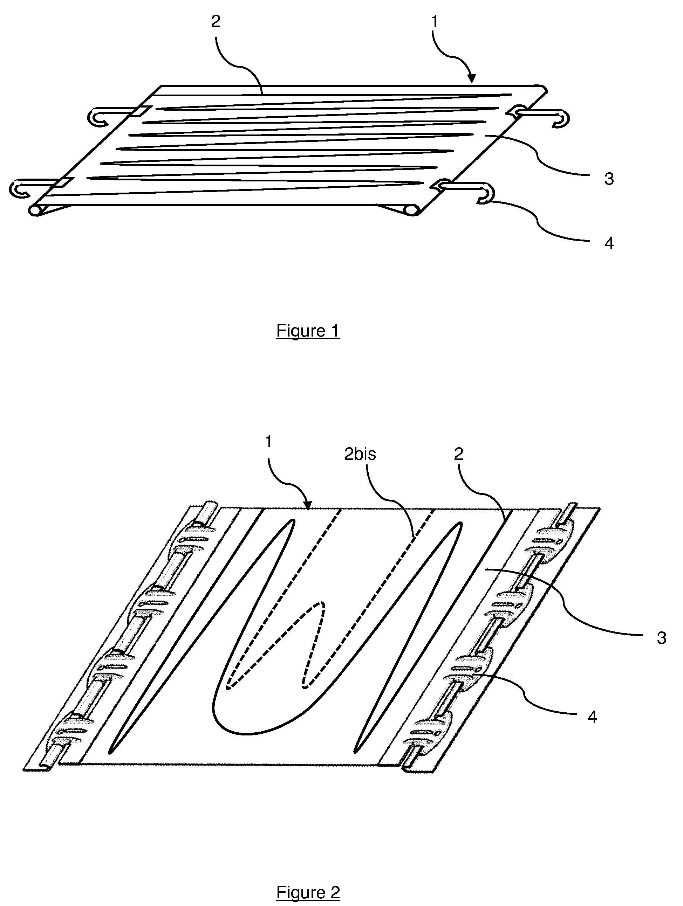

Comme illustré respectivement aux figures 1 et 2, le dessin formé par la piste électrique 2 sur ou au sein de la nappe de suspension 3 peut être réalisé sur tout ou partie de la nappe de suspension 3 en fonction de l'application visée pour ladite piste électrique 2.

La nappe de suspension 3 permet d'améliorer le confort du passager tout en lui procurant un bon maintien sur le siège. Pour ce faire, il s'agit d'un élément déformable dans le sens où il compense, par une déformation statique, l'effort exercé sur le siège par l'utilisateur. Une telle nappe de suspension 3 peut être tout élément déformable et isolant arrimé sur l'armature du siège et bien connu de l'homme du métier.

Selon un mode particulier de réalisation et comme illustré aux figures 1 et 2, la nappe de suspension 3 peut notamment comprendre au moins un composant tissé ou non-tissé arrimé à l'armature du siège par des moyens d'attache 4 disposés sur au moins une partie du pourtour de la nappe de suspension 3.

Selon un mode de réalisation, la nappe de suspension 3 comprend au moins un composant tissé. Avantageusement dans un tel mode de réalisation, la piste électrique 2 est formée sur au moins un fil du composant tissé. La piste électrique 2 est alors directement intégrée dans la maille du composant tissé. Autrement dit, la piste électrique 2 est formée au sein de la nappe de suspension 3. Un tel mode de réalisation permet une augmentation de la surface de la piste électrique 2 lorsque celle-ci recouvre l'intégralité de la surface dudit fil. Là encore, la déformation de la nappe de suspension 3 se traduit par une déformation de la piste électrique 2 et donc par une évolution de la résistance linéique de ladite piste.

Selon un autre mode de réalisation, la nappe de suspension 3 est formée d'au moins un polymère orienté. A titre d'exemple, il peut s'agir d'une nappe de suspension telle que décrite dans le document FR 2 940 029. Dans un tel mode de réalisation, la piste électrique 2 est dessinée sur au moins une des faces principales de la nappe de suspension 3 de sorte que la déformation de la nappe se traduit par une évolution de la résistance linéique de la piste électrique 2. On entend par « face principale » de la nappe de suspension 3 la face supérieure ou la face inférieure de ladite nappe lorsque celle-ci est arrimée à l'armature du siège. Autrement dit, la piste électrique 2 est formée directement sur la nappe de suspension 3.

Selon un mode de réalisation préféré, l'élément d'assise 1 comporte plusieurs pistes électriques (2, 2 bis, etc) électriquement indépendantes entre elles. Comme illustré à la figure 2, les différentes pistes électriques peuvent être réparties sur des zones différentes de l'élément d'assise 1. Les pistes peuvent également être superposées les unes sur les autres et séparées par des couches isolantes, par exemple par une couche de laque étirable et isolante. La présence de plusieurs pistes indépendantes les unes des autres permet d'attribuer une fonction différente à chacune des pistes électriques 2, 2 bis, etc.

A titre d'exemple, une piste électrique 2 peut être utilisée en tant que jauge de déformation dans un dispositif de classification d'un passager assis sur un siège. Un tel dispositif permet de détecter la présence d'un passager sur le siège et également de différencier la présence sur ledit siège d'un objet, d'un enfant ou d'un adulte. Un tel dispositif trouve en particulier son application dans les systèmes de :
- rappel signalant à un passager le non-bouclage de sa ceinture de sécurité,
- pré-tension de ceinture de sécurité,
- arrêt et démarrage automatique du moteur (start and stop),
- gonflage adapté d'un airbag,
- résistance chauffante dans le cas d'un siège chauffant, etc.

De tels systèmes voient ainsi leur fonctionnement asservi à la présence spécifique d'un passager adulte sur le siège voire même à un passage particulier dont les caractéristiques morphologiques ont été enregistrées. Les dispositifs de classification de passagers peuvent également être utilisés afin d'adapter la force de freinage d'un bus, d'un train ou d'un avion en fonction du poids total des passagers.

La piste électrique 2 est formée par une encre conductrice et est configurée pour présenter une résistance linéique variable en fonction de la déformation de la nappe de suspension 3. Plus l'élément d'assise 1 est déformé, e.g. étiré sous l'effet du poids du passager, plus les particules conductrices de l'encre conductrice sont espacées entre elles et plus la résistance linéique de la piste électrique 2 augmente. Il est ainsi possible d'activer les fonctions du siège (rappel de non-bouclage de ceinture, déploiement d'airbag, siège chauffant) que lorsque le siège est occupé par un passager. La différenciation d'une occupation du siège par un simple sac ou par un passager est réalisée en fonction de la déformation plus ou moins importante induite sur la nappe de suspension 3.

Selon un mode de réalisation avantageux, la ou les pistes électriques 2 de l'élément d'assise 1 présentent une résistance linéique comprise entre 1 et 1000 Ω/m, préférentiellement entre 120 et 1000 Ω/m et, plus préférentiellement encore, entre 50 et 500 Ω/m.

Avantageusement, les pistes électriques d'un même élément d'assise 1 présentent des résistances linéiques différentes.

La piste électrique 2 est associée à une source de courant et à un système de mesure. La source de courant est configurée pour générer un courant susceptible de circuler le long de la piste électrique 2 et d'être transmis au système de mesure. Le système de mesure est configuré pour convertir une valeur de résistance linéique en un signal électrique. Tout type de source de courant et de système de mesure peut être utilisé.

Selon un mode de réalisation particulier, l'encre conductrice est formée de microparticules métalliques, plus préférentiellement de microparticules d'argent et/ou d'or. Une telle encre offre l'avantage d'une faible résistivité tout en présentant des propriétés physiques et électriques particulièrement stables.

Selon un mode de réalisation équivalent, les microparticules métalliques constituant la piste électrique 2 peuvent être déposées non pas par une encre conductrice mais par métallisation. Il peut s'agir d'une métallisation directement sur la nappe de suspension 3 ou d'une métallisation d'au moins un fil composant ladite nappe de suspension 3.

Afin de protéger les pistes électriques 2, l'élément d'assise 1 comprend avantageusement au moins une couche protectrice appliquée sur la ou les pistes électriques 2. Il peut s'agir par exemple d'une couche de laque ou de vernis en matière inerte qui peut notamment être appliquée par simple immersion de l'élément d'assise 1 dans la laque.

L'encre conductrice de la piste électrique 2 peut être appliquée par tout moyen connu de l'homme du métier. A titre d'exemple, lorsque la piste électrique 2 recouvre la surface d'un fil de l'élément d'assise 1, l'encre conductrice peut être appliquée par trempage dudit fil directement dans un bain d'encre. La piste électrique 2 peut également être imprimée, par exemple par une technique d'impression jet d'encre, sur une nappe de suspension 3 à base de polymère.

La piste électrique 2 telle que décrite ci-avant présente l'avantage de pouvoir être réalisée sur tout type de nappe de suspension. L'élément d'assise 1 présente ainsi l'intérêt d'être fonctionnalisé. Il n'est donc pas nécessaire de l'associer à un détecteur additionnel tel que décrit dans l'art antérieur. L'élément d'assise 1 permet ainsi de réduire le poids et l'épaisseur des sièges et résout également les problèmes d'assemblage et de fixation des détecteurs dans l'assise des sièges, notamment des sièges de véhicule.

Dans l'art antérieur, un capteur externe est monté sur le siège, par exemple sur la nappe de suspension de l'élément d'assise 1. Dans cette configuration, la déformation du capteur n'est pas liée à la déformation de la nappe et le capteur n'est pas configuré pour supporter le passager. En cas de mauvais alignement du capteur dans l'élément d'assise, la mesure est faussée ou le capteur peut être détérioré ce qui entraine l'envoi d'informations erronées. Former la nappe de suspension 3 et le capteur, matérialisé par la piste électrique 2, dans la même pièce permet de s'assurer du parfait alignement du capteur par rapport à la nappe de suspension 3. Cela permet également un remplacement plus facile.

L'invention a également pour objet un siège comportant un élément d'assise 1 tel que précédemment décrit.

## Revendications

1. Elément d'assise pour un siège comportant :
- une nappe de suspension (3) déformable, et
- au moins une piste électrique (2) configurée pour présenter une résistance linéique variable en fonction de la déformation de la nappe de suspension (3), **caractérisé en ce que** la piste électrique (2) est formée directement sur la nappe de suspension (3) ou au sein de la nappe de suspension (3).

2. Elément d'assise selon la revendication 1, **caractérisé en ce que** la piste électrique (2) est formée par une encre conductrice, l'encre conductrice étant de préférence formée de microparticules métalliques.

3. Elément d'assise selon la revendication 1 ou 2, **caractérisé en ce qu'**il comporte plusieurs pistes électriques (2) indépendantes entre elles.

4. Elément d'assise selon l'une quelconque des revendications précédentes, **caractérisé en ce que** la nappe de suspension (3) comprend au moins un composant tissé, et **en ce que** la piste électrique (2) est formée sur au moins un fil du composant tissé.

5. Elément d'assise selon les revendications 1 à 3, **caractérisé en ce que** la nappe de suspension (3) est formée d'au moins un polymère orienté, et **en ce que** la piste électrique (2) est dessinée sur au moins une des faces principales de la nappe de suspension (3).

6. Elément d'assise selon l'une quelconque des revendications précédentes, **caractérisé en ce que** la ou les pistes électriques (2) présentent une résistance linéique comprise entre 1 et 1000 Ω/m, préférentiellement entre 120 et 1000 Ω/m et, plus préférentiellement encore, entre 50 et 500 Ω/m.

7. Siège comportant un élément d'assise (1) selon l'une quelconque des revendications précédentes.

## Patentansprüche

1. Sitzflächenelement für einen Sitz, das umfasst:
- eine verformbare Aufhängungsschicht (3) und
- mindestens eine elektrische Bahn (2), die so vorgesehen ist, dass sie einen Linienwiderstand hat, der abhängig von der Verformung der Aufhängungsschicht (3) variabel ist, **dadurch gekennzeichnet, dass** die elektrische Bahn (2) direkt auf der Aufhängungsschicht (3) oder in der Aufhängungsschicht (3) gebildet ist.

2. Sitzflächenelement nach Anspruch 1, **dadurch gekennzeichnet, dass** die elektrische Bahn (2) von einer leitenden Tinte gebildet wird, wobei die leitende Tinte vorzugsweise von metallischen Mikropartikeln gebildet wird.

3. Sitzflächenelement nach Anspruch 1 oder 2, **dadurch gekennzeichnet, dass** es mehrere voneinander unabhängige elektrische Bahnen (2) umfasst.

4. Sitzflächenelement nach einem der vorstehenden Ansprüche, **dadurch gekennzeichnet, dass** die Aufhängungsschicht (3) mindestens einen gewebten Bestandteil umfasst, und dass die elektrische Bahn (2) auf mindestens einem Faden des gewebten Bestandteils gebildet ist.

5. Sitzflächenelement nach den Ansprüchen 1 bis 3, **dadurch gekennzeichnet, dass** die Aufhängungsschicht (3) von mindestens einem orientierten Polymer gebildet ist, sowie dadurch, dass die elektrische Bahn (2) auf mindestens eine der Hauptseiten der Aufhängungsschicht (3) aufgezeichnet ist.

6. Sitzflächenelement nach einem der vorstehenden Ansprüche, **dadurch gekennzeichnet, dass** die elektrische/n Bahn/en (2) einen Linienwiderstand von 1 bis 1000 Ω/m, noch besser von 120 bis 1000 Ω/m und am besten von 50 bis 500 Ω/m aufweisen.

7. Sitz, der ein Sitzflächenelement nach einem der vorstehenden Ansprüche umfasst.

## Claims

1. A seating part for a seat comprising:
- a deformable suspension sheet (3), and
- at least one electric track (2) configured to present a variable resistance per unit length according to the deformation of the suspension sheet (3), **characterized in that** the electric track (2) is formed directly on the suspension sheet (3) or within the suspension sheet (3).

2. The seating part according to claim 1, **characterized in that** the electric track (2) is formed by a conducting ink, the conducting ink preferably being formed by metallic microparticles.

3. The seating part according to claim 1 or 2, **characterized in that** it comprises several electric tracks (2) independent from one another.

4. The seating part according to any one of the foregoing claims, **characterized in that** the suspension sheet (3) comprises at least one woven component, and **in that** the electric track (2) is formed on at least one thread of the woven component.

5. The seating part according to claims 1 to 3, **characterized in that** the suspension sheet (3) is formed by at least one oriented polymer, and **in that** the electric track (2) is traced on at least one of the main surfaces of the suspension sheet (3).

6. The seating part according to any one of the foregoing claims, **characterized in that** the electric track or tracks (2) present a linear resistance comprised between 1 and 1000 Ω/m, and preferentially between 120 and 1000 Ω/m, and even more preferentially between 50 and 500 Ω/m.

7. A seat comprising a seating part (1) according to any one of the foregoing claims.
